# EUROPEAN PATENT APPLICATION

(11) **EP 4 588 456 A1**
(43) Date of publication of application: **23.07.2025**
(21) Application number: 24152161.6
(22) Date of filing: 16.01.2024
(51) Int. Cl.: A61C 15/02

(54) **VACUUM ASSISTED LIQUID TRANSFER INFUSION OF TOOTHPICKS**

(71) Applicant: Pixotine Products Inc, Jupiter Florida 33458 (US)
(72) Inventor: Grossman, Evan Todd, Jupiter, 33458 (US)
(74) Representative: CH Kilger Anwaltspartnerschaft mbB

(57) **Abstract**

The present invention relates to a method of vacuum assisted vertical liquid transfer infusion of a liquid agent into porous toothpick comprising the steps of:
a. placing one or more porous toothpicks vertically into a first container,
b. filling said first container with the liquid agent to be transferred into the porous toothpick such that one end of said one or more toothpicks is at least partially immersed in said liquid agent,
c. placing said first container into a vacuum chamber,
d. applying and maintaining a vacuum to said first container until the desired quantity of liquid agent has been transferred by capillary force into the porous toothpick.

The invention also relates to a porous toothpick made with the method of the present invention.

## Description

### BACKGROUND

Toothpicks have been widely used for centuries to clean teeth. Toothpicks are advantageous for cleaning the mouth by removing food caught between teeth. However, toothpicks often do not have a pleasant taste and are not otherwise enjoyable . The common materials comprised in toothpicks, such as wood and plastic, have negligible taste and sometimes even an unpleasant bitter taste. Smoking cigarettes is the most common method of consuming nicotine . However, many municipalities prohibit smoking in public and even private areas, making it difficult for smokers to satiate nicotine cravings. Other ways of consuming nicotine such as with dip or chew can be messy and are not always appropriate in specific social settings, and further, may be undesirable to certain users because of taste or other factors. Further, many of the common methods of consuming nicotine require bulky products to be carried on the consumer' s person; See introduction US 2019 / 0191763 A1. If produced in a reliable manner toothpicks may also serve to apply substances such as painkilling substances, such as lidocaine or even other active pharmaceutical ingredients (AlPs). Lidocaine toothpicks could be supplied by dentists after treatment as a tooth pain relaxing agent. Methods for reliable agent infusion into toothpicks do not exist although some attempts have been made.

Coming back to nicotine, the use of the nicotine containing gum eliminates the highly detrimental cigarette smoke. However, the chewing gum is, in many circles, considered to be socially unacceptable and could, in addition, interfere with the speech of the user. In addition, use of the gum does nothing to satisfy the user's need to touch and manipulate a cigarette-like object with his lips and hands.

Nasal sprays are unpleasant to use, and also fail to satisfy the user's needs to touch and manipulate a cigarette-like objects with the user's lips and hands. While a 24-hour patch can be attached to the user's upper arm, or other portion of the body, it is unsightly, especially in the summer, when the user tends to wear short sleeved shirts, blouses or dresses. In fact, sales of such patches drop significantly in the summer. Such patches also fail to satisfy the user's need touch and manipulate a cigarette-like object. While an inhaler does satisfy a user's need to touch and manipulate a cigarette-type object with his lips and hands, the inhaler is relatively large and unsightly. The use of an inhaler has a social stigma attached thereto, and its usage is very limited in the United States.

As a proposed solution, nicotine-containing dental floss has been devised, such as that disclosed by U.S. Patent No. 5,035,252. However, in order to absorb the nicotine and overcome the withdrawal symptoms, the user must floss his or her teeth many times throughout the day. Although flossing promotes healthy teeth and gums, flossing in public has a social stigma attached to it.

Yet others have proposed nicotine containing toothpicks, such as U.S. Patent No. 5,924,430. Besides removing food particles, toothpicks have dental hygiene functions by stimulating gum tissue, removing plaque and calculous that accumulate on the tooth surface and help prevent caries.

However, a drawback of such nicotine-containing toothpicks is the lack of control of the amount of nicotine delivered thereby. That is, the inventor is not aware of any nicotine-containing toothpick references which disclose a method for making such toothpicks with an acceptable concentration of nicotine, or a series of nicotine toothpicks which can be used over a prolonged period of time to wean the user from his nicotine addiction. US 2015/0297472 A1 and US 2019 / 0191763 A1 will be discussed in more detail below. The prior art methods are also prone to imprecise dosing. The method is labor intensive and requires more steps.

Many people also do not realize that nicotine alone is an extremely toxic poison, sold commercially in the form of a pesticide. Every year, many children go to the emergency room after eating cigarettes or cigarette butts. Sixty milligrams (60 mg) of nicotine (about the amount in three or four cigarettes if all of the nicotine were absorbed) could (noting that depending on a human's weight, size and tolerance the human could have different thresholds) kill an adult, and consuming only one cigarette's worth of nicotine is enough to make a toddler severely ill. Nicotine poisoning causes vomiting and nausea, headaches, difficulty breathing, stomach pains and seizures. Thus, an adult could become ill by absorbing as little as 0.5-10 mg of nicotine (noting the nicotine tolerance plays an important role in this assumption).

Nicotine can be absorbed through not only the lungs, but also the mucus membranes, buccal lining of the gums, as well as the skin.

US 2015/0297472 A1 describes a device for delivering an oral treatment and a method for preparing such, the product exhibiting the alleged capacity for delivering oral additives to the user. The device may be prepared by pretreating a wooden substrate to increase porosity and decrease hardness. The device is then immersed in a compound comprising the oral additive, a masking agent, and/or a sweetening agent, where the Substrate absorbs the compound.

The wooden material of the toothpicks is homogeneous only at first glance. Annual summer/winter rings and other natural factors affecting trees lead to a certain degree of material heterogeneity that makes reliable and consistent liquid loading difficult. The method thus does not produce toothpicks of homogenous agent loading. The toothpicks suffer from a patchy loading resulting in unreliable agent concentration control. Also, the viscosity of the liquid nicotine solution may not allow all the air to escape from the wood's pores prior to infusion.

US 2019 / 0191763 A1 describes embodiments of a device and method for producing infused toothpicks, specifically infused toothpicks comprised of porous material including, but not limited to, wood or a wood composite. As for the method described in US 2015/0297472 A1 the method does not produce toothpicks of homogenous agent loading. Also here, the toothpicks suffer from a patchy loading resulting in unreliable agent concentration control. Concentration control is essential for dose control. Obviously, if the toothpicks are loaded with varying amount of nicotine, then dose control becomes difficult if not impossible. The present invention solves this problem.

US 2006/0162732 A1 relates to another method for making a nicotine-containing toothpick, it includes creating a solution having a predetermined concentration of nicotine. A toothpick is exposed to the solution, and the amount of solution added to the toothpick is determined. The solution may be a liquid Solution, or a saliva soluble powder solution. The concentration of the solution can be adjusted, or multiple solutions of varying concentrations of nicotine made, to create toothpicks of varying nicotine levels. The same drawbacks may be identified for this method, patchy loading resulting in unreliable agent concentration control.

Accordingly, there is a continuing need for a controlled method of making a nicotine toothpick. Such a method should provide a toothpick with a concentration or level of nicotine which can produce a more consistent product and user experience. Such a method should also include the creation of toothpicks of varying nicotine concentrations so as to wean the user from his or her addiction to nicotine should the consumer wish to do so. The present invention fulfills these needs and provides other related advantages.

Also, there is a need for a method for liquid transfer to a porous toothpick for loading an agent reliably into a toothpick. Such an agent may be lidocaine, a painkiller, or any other API.

### SUMMARY OF THE INVENTION

The present invention overcomes the drawbacks of the previous methods. The benefits of the present invention are an improved method of preparing nicotine infused toothpicks with improved efficiency. The present invention relates to a method of vacuum assisted liquid transfer infusion of a liquid agent into porous toothpick comprising the steps of:
a. placing one or more porous toothpicks vertically into a first container,
b. filling said first container with the liquid agent to be transferred into the porous toothpick such that one end of said one or more toothpicks is at least partially immersed in said liquid agent,
c. placing said first container into a vacuum chamber,
d. applying and maintaining a vacuum to said first container until the desired quantity of liquid agent has been transferred by capillary force into the porous toothpick.

In a further embodiment the invention relates to this method.

The present invention relates to a method of vacuum assisted liquid transfer infusion of a liquid agent into porous toothpick comprising the steps of:
a) placing one or more porous toothpicks into an air-sealable first container comprising a lid for said air sailing,
b) filling said first container with the liquid agent to be transferred into the porous toothpick such that said one or more toothpicks are at least partially immersed in said liquid agent,
c) adjusting the lid on said first container such that it allows for a small amount air transfer and the first container is not entirely air-sealed,
d) placing said first container into a vacuum chamber,
e) applying a vacuum to said first container until the desired quantity of liquid agent has been transferred into the porous toothpick.

The invention also relates to a porous toothpick made with the method of the present invention.

### DETAILED DESCRIPTION OF THE INVENTION

Vacuum Assisted Resin Transfer Molding (VARTM) or Vacuum Injected Molding (VIM) is a closed mold, out of autoclave (OOA) composite manufacturing process. VARTM is a variation of Resin Transfer Molding (RTM) with its distinguishing characteristic being the replacement of the top portion of a mold tool with a vacuum bag and the use of a vacuum to assist in resin flow. The process involves the use of a vacuum to facilitate resin flow into a fiber layup contained within a mold tool covered by a vacuum bag. After the impregnation occurs, the composite part is allowed to cure at room temperature with an optional post cure sometimes carried out. Most modern high-tech boats and planes are built this way. The benefits of this method are homogeneous transfer of the resin within the composite.

The use of capillary electrophoresis as a tool to conduct immunoassays has been an area of increasing interest over the last decade. This approach combines the efficiency, small sample requirements, and relatively high speed of CE with the selectivity of antibodies as binding agents. Basically, paper strips are loaded with antigen or antibody and the tip of the strip is immersed into the liquid with the analyte. Capillary forces move the analyte across the antibody containing portion of the strip in a homogenous manner. Most CE immunoassays in the past have employed homogeneous methods in which the sample and reagents are allowed to react in solution. These homogeneous methods have been conducted as both competitive binding immunoassays and as non-competitive binding immunoassays. Fluorescent labels are most commonly used for detection in these assays, but enzyme labels have also been utilized for such work. Some additional work has been performed in CE immunoassays with heterogeneous methods in which either antibodies or an analog of the analyte is immobilized to a solid support.

The present invention combines these technical principles for first time and thereby achieves an unexpected result. Toothpicks are loaded homogenously and consistently with the desired concentration and/or dose of agent.

The present invention thus relates in a first embodiment to a method of vacuum assisted liquid transfer infusion of a liquid agent into porous toothpick comprising the steps of:
e. placing one or more porous toothpicks vertically into a first container,
f. filling said first container with the liquid agent to be transferred into the porous toothpick such that one end of said one or more toothpicks is at least partially immersed in said liquid agent,
g. placing said first container into a vacuum chamber,
h. applying and maintaining a vacuum to said first container until the desired quantity of liquid agent has been transferred by capillary force into the porous toothpick.

One may imagine that the vacuum chamber holds the liquid agent and in such an embodiment no additional container would be required.

The present invention relates also in a second embodiment to a method of vacuum assisted liquid transfer infusion of a liquid agent into porous toothpick comprising the steps of:
placing one or more porous toothpicks into an air-sealable first container comprising a lid for sad air sailing,
filling said first container with the liquid agent to be transferred into the porous toothpick such that said one or more toothpicks are at least partially immersed in said liquid agent, adjusting the lid on said first container such that it allows for a small amount air transfer and the first container is not entirely air-sealed,
placing said first container into a vacuum chamber,
applying a vacuum to said first container until the desired quantity of liquid agent has been transferred into the porous toothpick.

The present invention relates to this a second embodiment in which the vacuum may be relieved from the vacuum chamber but remains in the first sealable container. These containers may be removed from the chamber and stored in a UV tight environment until, under vacuum the desired amount of liquid agent has been transferred and the lid may opened in order to let air into the container.

The present invention makes use of three different principles. That is firstly the principle of capillary force loading, the second principle is the principle of vacuum assisted infusion. And finally, the third principle relates to ratio of loading area to total loaded porous cubic volume. Due to the fact that the toothpicks stand vertically, the entire liquid volume must pass through a small loading area or space, which is that immersed in the liquid, i.e. only the tip. That results in a slow loading speed. One could alternatively imagine dropping the toothpick entirely into the liquid.

The different techniques have nothing to do with one another. One is used for boat building and airplane building and the other is used in molecular diagnostics. It has been found that vacuum infusion techniques provide for a very homogeneous distribution of the liquid across the composite material. In the molecular diagnostics capillary force electrophoresis is used for the same reason that is a homogeneous distribution of the analyte to be analyzed.

The inventors have now shown that by placing the porous toothpicks vertically with their tips into the liquid agent they can make use of the same capillary force principle for loading the liquid agent into the porous toothpick. Additionally, and at the same time, the inventors have shown that using vacuum assisted infusion techniques makes it possible to use the capillary force principle in a vacuum, thereby keeping the toothpicks immersed in the liquid agent in a vertical manner under vacuum for a prolonged period of time, allowing for the capillary movement of the liquid agent in a homogeneous manner into the porous toothpick.

The partially closed container in the second embodiment of the invention containing the vertically placed toothpicks and the liquid agent are placed into the vacuum device and a vacuum is applied. The vacuum in the vacuum chamber sucks the air out of the containers and thereby closes the lids in a airtight manner Now, the toothpicks, which are immersed with their tips in the liquid agents are in a vacuum environment and the capillary forces take over, moving the liquid agents in a homogeneous manner into the toothpicks. Previous methods have suffered from the fact that wood is not a homogeneous material.

Hence, it is preferred if the toothpicks stand vertically in the liquid agent and the toothpick ends are immersed in said liquid agent such that the agent can travel by means of capillary force into the toothpick. Preferably, liquid agent is an aqueous liquid agent and it comprises a substance selected from the group of active pharmaceutical ingredient (API), painkillers such as lidocaine, a laxative, caffeine, psylocibin, cannabis or extracts thereof, and nicotine.

In certain embodiments, the oral additive may comprise an anticaries agent, an anesthetic or analgesic agent. For example, Suitable anticaries agents may include, but are not limited to, fluoride, phosphorous containing agents (includeing sodium monofluorophosphate and calcium glycerophosphate and the like), clorhexidine, antimicrobials, natural extracts and metals. For example, Suitable anesthetic agents may include, but are not limited to, local anesthetics such as lidocaine, benzocaine or any other anesthetics ending incaine." or any agents that can be applied topically to the mouth and throat and that provide numbing. For example, Suitable analgesic agents may include, but are not limited to, natural or synthetic painkillers such as non-steroidal antiinflammatory drugs (NSAIDs) such as ibuprofen, acetaminophen, aspirin, naproxen, paracetamol, cyclooxygenase (COX-1 and COX-2) inhibitors, opiates, and any other naturalor synthetic agents that inhibit the sensation of pain.

In certain embodiments, the oral additive may be a compound used in the treatment of oral ailments. As used herein, the term "oral ailment' means any of a variety of conditions experienced by users for which the devices of the present technology may be used to treat or ameliorate the symptoms, or decrease discomfort to a user. Examples of oral ailments that may be treated with the devices herein include any disorder of the mouth, tongue, gums, oral mucosa, teeth or other internal surfaces of the mouth orthroat, such as, for example, caries (cavities), dry mouth, Suppressed salivation, oral infection, gum disease, canker Sores or other oral or throat trauma, pain or discomfort. One example of such an application is the use of spilanthol and its derivatives as an oral additive, including various formulations comprising essential oils obtained from Spilanthes oleracia Jacquin, Spilanthes acmella, or the like. These and other substances have a benefit in treating oral ailments such as, for example, dry mouth. As used herein, "treating or "treatment" refers to amelioration or reduction of the effects of an ailment or condition by any amount. Ideally and preferably the vacuum is adjusted to between 0,01 MPa and 0,2 MPa, 0,04 MPa and 0,15 MPa, 0,05 MPa and 0,1 MPa or, 0,08 MPa and 0,9 MPa. The most preferable vacuum is 0,08 MPa and 0,9 MPa. Other liquid agents may require adjusting the vacuum.

It is preferred in the first embodiment of the invention that the toothpick remain in the vacuum chamber until the desired amount of liquid agent has been taken up by capillary force into the porous toothpick. The method of the inventors creates zero to minimal waste in liquid thus protecting the environment and increasing profits to manufacturer by minimizing liquid material costs and waste disposal fees and labor of disposal costs. The method of the inventors provides a more accurate and consistent dosing to benefit the consumer/user for safety and a more satisfying user experience.

It is preferred in the second embodiment of the invention that the toothpicks remain in the sealable container until the desired amount of liquid agent has been taken up by capillary force into the porous toothpick.

In the method of the invention the vacuum seals the lid of said first container (also the method of using no lid inside a cabinet), the container additionally comprising a vacuum, and wherein the vertically placed porous toothpicks remain in the container for liquid agent transfer for between 12 hours and 15 days, 1 day and 10 days, or between 4 days and 7 days. The present method has the advantage that the container comprising the toothpicks is within the vacuum chamber and once the vacuum chamber is under vacuum the lids on the containers are closed and a vacuum is present in the container where the toothpicks are immersed with their tips in the liquid agent. Capillary forces can now move the aqueous liquid agent in a homogeneous manner, into the toothpicks until no more aqueous liquid agent is present in the container and all the aqueous liquid agent has moved into the toothpicks present in the container. This also has the chemical benefit that the oxygen normally present in the air does not react with the active pharmaceutical and/or psychoactive ingredient or the nicotine present in the aqueous liquid agent.

Ideally and preferably, the liquid agent is transferred entirely to the porous toothpick such that the toothpick is saturated. This is a big benefit of the present invention. The inventors have found out that by titrating the amount of liquid agent in the container they can saturate the toothpick entirely with liquid agent such that no liquid agent remains in the container. The absence of remaining liquid agent and hence, the absence of an extra drying stage is important when it comes to cost and environmental protection.

Ideally, the first container is made of glass, it may be but not limited to a mason jar (16oz or pint wide mouth mason jar). Mason jars are typically used for vacuum sealing and are ideally suited for placing the toothpicks in a vertical manner into the liquid agent. A further benefit of the vacuum is, that it preserves the flavor of the liquid agent within the porous toothpick. The lack of oxygen within the container has a flavor saving technical effect. This is important as it also means, that. The concentration calculations can be done reliably as the concentration in the liquid agent will be transferred efficiently into the porous toothpick and the oxygen in the atmosphere will not interfere with the agents or the flavor therein.

Ideally, the porous toothpick is a wooden toothpick. These are typically 6,5 cm long. Preferably the length is between 4 and 8 cm, ideally between 5 cm and 7 cm. One may also use finger food skewers. These have a handle for thumb and finger at one end and a tip at the other end. In this case they would be immersed into the liquid agent with their tip side. Preferably, the toothpicks are made of natural birchwood.

Hence, ideally and preferably, the liquid agent comprises a flavoring agent selected from the group comprising mint flavor, cinnamon flavor, tobacco flavor, vanilla flavor, strawberry flavor, sweetening flavor, or lime flavor. Of course others may be selected. Such flavors may be organic or vegan. It is preferred to use known and approved food flavoring chemistry like those that are Generally Recognized as Safe or GRAS by the US FDA.

For example, any composition described herein may include a flavor or flavor masking agent. Exemplary flavors include but are not limited to licorice, kudzu, hydrangea, Japanese white bark magnolia leaf, chamomile, fenugreek, clove, menthol, Japanese mint, aniseed, cinnamon, herb, wintergreen, cherry, berry, apple, peach, Dramboui, bourbon, scotch, whiskey, spearmint, peppermint, lavender, cardamon, apium graveolens, cascarilla, nutmeg, sandalwood, bergamot, geranium, honey essence, rose oil, vanilla, lemon oil, orange oil, cassia, caraway, cognac, jasmin, ilangilang, sage, fennel, piment, ginger, anise, coriander, coffee, coconut, grapefruit, lime, mandarin, pineapple, strawberry, raspberry, mango, passion fruit, kiwi, pear, apricot, grape, banana, cranberry, blueberry, black currant, red currant, gooseberry, lingon berries, thyme, basil, camille, valerian, parsley, camomile, tarragon, lavender, dill, cumin, salvia, aloe vera, balsam, eucalyptus, or a mint oil from any species of the genus Mentha.

Flavors may also be provided by solid plant matter, e.g., mint leaves, which are typically 10% flavor oils and 90% insoluble fiber. Exemplary plants further include licorice, kudzu, hydrangea, Japanese white bark magnolia, chamomile, fenugreek, clove, Japanese mint, cinnamon, herb, cherry, berry, peach, apple, lavender, cardamon, apium graveolens, cascarilla, nutmeg, sandalwood, bergamot, geranium, rose, vanilla, lemon, orange, cassia, caraway, jasmin, ilangilang, sage, fennel, piment, ginger, anise, coriander, coffee (e.g., Arabica, Brazilian Santos, Columbian Supremo, Costa Rican, Ethiopian Harrar, Hawaiian Kona, Kenya AA, Jamaica, Sumatra, Tanzanian Peaberry, Zimbabwe, or hazelnut, vanilla, amaretto, fruit, almond, Irish cream, cinnamon, or butterscotch flavored), or any species of the genus Mentha. Suitable plant matter further includes beans (e.g., coffee beans, vanilla beans, or cocoa nibs), nuts (e.g., almonds, peanuts, cashews, walnuts, pecans, and pistachios), or sticks (e.g., cinnamon), in whole or ground form. The plant matter may be separated from the tobacco after transference of flavor, or it may remain in combination with the tobacco, as described in WO 2005/041699. Combinations of plant matter may also be employed.

Sweetener such as sucrose, sucralose, acesulfame potassium, aspartame, saccharine, cyclamates, lactose, tagatose, sucrose, glucose, fructose, sorbitol, mannitol, and combinations thereof may be used. Sugar sweeteners generally include saccharide-containing components such as, but not limited to, sucrose, dextrose, maltose, dextrin, dried invert sugar, fructose, levulose, galactose, corn syrup solids, and the like or mixtures thereof. Sorbitol can be used as a sugarless sweetener. Additionally, sugarless sweeteners can include, but are not limited to, other sugar alcohols such as mannitol, xylitol, hydrogenated starch hydrolysates, maltitol, and the like or mixtures thereof. High intensity artificial sweeteners can also be used in combination with the above. Preferred artificial sweeteners include, but are not limited to sucralose, aspartame, salts of acesulfame, alitame, saccharin and its salts, cyclamic acid and its salts, glycyrrhizin, dihydrochalcones, thaumatin, monellin, and the like or mixtures thereof.

Plasticizers such as glycerine, propylene glycol, polyethylene glycol, sorbitol/mannitol, acetylated monoglycerides, monoacetin, diacetin, triacetin, 1,3 butane diol, and the like or mixtures thereof may be used. Fillers such as starch, microcrystalline cellulose, wood pulp, disc refined wood pulp, insoluble fiber, soluble fiber, calcium carbonate, dicalcium phosphate, calcium sulfate, a clay, and the like or mixtures thereof may be used. Lubricants such as stearic acid and a stearate such as magnesium stearate, light anhydrous silicic acid, talc, sodium lauryl sulfate and the like, or mixtures thereof or a wax such as lecithin, glycerol monostearate, propylene glycol monostearate, cocoa butter, white petrolatum, polyethylene glycol and the like, or mixtures thereof may be used. Preservatives such as methyl paraben, ethyl paraben, propyl paraben, potassium sorbate, sodium benzoate, sodium bisulfite and the like and the like, or mixtures thereof may be added. Stabilizers such as ascorbic acid, monostearyl citrate, BHT, BHA, citric acid, sodium citrate, acetic acid and the like, or mixtures thereof may be added.

Coloring agent such as vegetable dyes or other food grade dyes, water soluble chlorophyll and the like, or mixtures thereof.

In one embodiment the aqueous liquid agent comprises nicotine and the concentration of the nicotine is between 5 mg/ml and 200 mg/ml, 10 mg/ml and 70 mg/ml, 20 mg/ml and 50 mg/ml or, 25 mg/ml and 35 mg/ml. In the present set-up of the inventors 5mg/ml yields about 0.5mg nicotine per toothpick and 200mg/ml yields about 20mg nicotine per toothpick.

It is preferred to load each toothpick with 0.5 mg to 20 mg of nicotine per toothpick, more preferable is 1 mg to 10 mg, 2 mg to 8 mg and finally 3 mg to 4 mg. Presently we prefer to transfer about 3.0 mg of nicotine per toothpick.

It is preferred if the aqueous solution comprises a hygroscopic solution such as glycerin. Ideally, 45 to 80% of the liquid agent is made-up of glycerin. Preferable concentrations range from 30% to 90%, from 30% to 85% and most preferably from 40% to 80% and even more preferably from 45% to 80%. These are volume percentages. Hence in certain embodiments the glycerin is at a volume percent concentration of between 45% to 69% of the aqueous liquid agent, 50% to 65% of the aqueous liquid agent, 55% to 65% of the aqueous liquid agent, or 58% to 62% of the aqueous liquid agent.

The inventors have found out, that cooling the aqueous liquid agent for storage is beneficial prior to transfer the liquid agent is brought to room temperature. Preferably, bulk solutions are stored a in photoprotective jugs as to not cause photo-oxidation or photo-degradation to the nicotine. In one embodiment the liquid agent is made from a bulk solution. Not only for flavor, but also for inhibiting any chemical reactions between the oxygen in the atmospheric air and the various components of the liquid agent. In the human body nicotine undergoes a variety of metabolic reactions involving oxidation, most of which result in transformations of the pyrrolidine ring. The major route of metabolism in most mammalian species involves oxidation of the 5'-carbon atom to give the γ-lactam derivative cotinine. Hence, ideally the liquid agent is precooled to a temperature of between 2°C and 15°C, preferably between 4°C and 8°C. Final capillary transfer is done at room temperature.

Ideally, the nicotine is at a volume percent concentration of between 0,1% to 20% of the aqueous liquid agent, nicotine is at a volume percent concentration of between 0,5% to 20%, 2% to 15% of the aqueous liquid agent, or 3% to 10% of the aqueous liquid agent.

In one embodiment salts are added to the liquid solution such a salt may be NaCl, NaCO or NaHCO₃-NaCl. It might be preferred to add a salt in order to decrease the pH thereby making the nicotine solution more basic and thus more bioavailable. Generally, the following pH range is preferred for the liquid agent, from pH5 to pH 11, while pH 6 to pH 10 is preferred.

A further benefit of the capillary infusion method under vacuum is that no extra drying process or step is needed.

The invention also relates to the toothpick made with a method according to the invention in a product process manner.

### EXAMPLES

### Manufacturing Process

Place toothpicks vertically in a container.

Add liquid nicotine solution to the container (only enough to reach the saturation point of the toothpicks). This will alleviate any waste fluid when the process is complete, thus saving time in performing an extra drying step and hence also saving labor cost. The zero to minimal waste in liquid agent thus protects the environment, decreases cost for manufacturers in large scale commercialization by minimizing liquid material costs and decreasing costs by limiting waste and hazardous waste disposal fees along with labor of disposal costs.

Apply vacuum.

Containers are sealed (or desiccator cabinet) under vacuum. Toothpick poors and containers become void of air leaving toothpick pores ready for full and consistent infusion.

Wait 12 hrs to 15 days until toothpicks are fully infused under the vertical capillary diffusion forces and there is no more liquid left in the container.

Toothpicks are now immediately ready for consumers to enjoy.

### Inserting toothpicks into jars

Toothpicks are transferred to the first sealable container. Insert toothpicks into jars/containers in a manner in which the toothpicks will sit vertically in the container.

### Applying nicotine solution

Remove nicotine solution storage container from refrigerator. Allow solution to come to room temperature so that application to each container occurs at the same viscosity throughout a work period.

The solution should be homogenous solution or it will be required to be mixed and/or shaken regularly. Using a calibrated liquid filling device such as a pipette, peristaltic pump or other liquid filling equipment, fill jars with the chosen volume of liquid solution.

### Vacuum infusion

Turn on vacuum chamber. Make sure it is set at 9 to 10 seconds or 0.08-0.09 MPa. Place filled jar in hand and cover with jar top. Secure top onto jar and screw on slightly. DO NOT TIGHTEN FULLY. Place covered jars into vacuum chamber. Close chamber. Turn on vacuum. Turn off vacuum. Check to make sure jars seal. If they do not seal, try again or replace cap and try again. Place vacuum sealed jars on tray for storage. Label racks with flavor, date, flavor lot code, toothpick lot code. Let toothpicks infuse until all the fluid has disappeared and toothpicks are fully saturated (about 4-7 days).

Toothpicks are now ready for use or to be packaged into consumer packaging.

### Research formulas

The embodiment of Nicotine Solution and levels are listed below:

| | |
|---|---|
| 3 % | Pure Nicotine Extract ( >98% purity) |
| 59.5% | USP Kosher Vegetable Glycerin |
| 37.5% | Distilled Water |

| | |
|---|---|
| 3 % | Pure Nicotine Extract ( >98% purity) |
| 62 % | USP Kosher Vegetable Glycerin |
| 35 % | Distilled Water |

| | |
|---|---|
| 3.12% | Pure Nicotine Extract ( >98% purity) |
| 61.88% | USP Kosher Vegetable Glycerin |
| 35% | Distilled Water |

| | |
|---|---|
| 3.9% | Pure Nicotine Extract ( >98% purity) |
| 61.1% | USP Kosher Vegetable Glycerin |
| 35% | Distilled Water |

Shelf life is enhanced using a material such as VG. Too little VG (or too much water) and the nicotine and water can evaporate from the wood. Proper preferred moisture and consistency of wood is obtained by using VG and distilled water at the proper discovered levels. Too little VG (or too much water) and the wood can dry out through evaporation. Hygroscopic material such as VG mixes well with water.

Hygroscopic material such as VG allows for diffusion of nicotine solution out of the wood and into the oral cavity due to the presence of water in saliva. Too little VG (or too much water) and the wood can become weak, brittle or too rubbery. Too much VG and the wood cannot absorb the solution since the VG is too viscous on its own to enter into the pores of the wood. Vacuum infusion is the preferred method to push the viscous solution into the wood pores while pressure infusion tends to bloat the wood causing splintering and softness. VG is considered as safe by the FDA. VG is used as as a more organic material for skin lotions and hair products. While being more conscious of skin irritation problems caused by using Propylene Glycol, VG is the preferred hygroscopic material. VG is used as an artificial sweetener and a drug additive. VG makes nicotine more palatable to the user. Mint, Cinnamon, and tobacco flavorings may be added. Mint and tobacco can be added together to mimic the taste of common smokeless tobacco products.
1. Normal
   > 98 % pure organic Nicotine Extract makes up 0.5% to 20% of solution.
   > 98% Vegetable Glycerin (Glycerin/Glycerol) makes up 45% to 80% of solution. 100% H₂0 (distilled water is preferred), both with and without a salt, makes up 10% to 50% of solution.
2. Mint flavored
   > 98 % pure organic Nicotine Extract makes up 0.5% to 20% of solution.
   > 98% Vegetable Glycerin (Glycerin/Glycerol) makes up 45% to 80% of solution.
   100% H₂0 (distilled water preferred) makes up 10% to 50% of solution.
   Mint, spearmint, peppermint, wintergreen oils/extracts and/or flavorings derived from natural and or artificial flavorings, both with and without added sweeteners and/or a salt, make up 1 to 25%.
3. Cinnamon flavored
   > 98 % pure organic Nicotine Extract makes up 0.5% to 20% of solution.
   > 98% Vegetable Glycerin (Glycerin/Glycerol) makes up 45% to 80% of solution.
   100% H₂0 (distilled water preferred) makes up 10% to 50% of solution.
   Cinnamon oil/extracts and/or flavorings derived from natural and or artificial flavorings, both with and without added sweeteners and/or a salt, make up 1% to 25%.
4. Tobacco flavored
   > 98 % pure organic Nicotine Extract makes up 0.5% to 20% of solution.
   > 98% Vegetable Glycerin (Glycerin/Glycerol) makes up 45% to 80% of solution.
   100% H_{2\}0 (distilled water preferred) makes up 10% to 50% of solution.

Tobacco flavorings/oils/extracts derived from natural and or artificial flavorings, both with and without added sweeteners and/or a salt, that may or may not be derived directly from tobacco make up 1% to 25%.

## Claims

1. A method of vacuum assisted liquid transfer infusion of a liquid agent into porous toothpick comprising the steps of:
a. placing one or more porous toothpicks vertically into a first container,
b. filling said first container with the liquid agent to be transferred into the porous toothpick such that one end of said one or more toothpicks is at least partially immersed in said liquid agent,
c. placing said first container into a vacuum chamber,
d. applying and maintaining a vacuum to said first container until the desired quantity of liquid agent has been transferred by capillary force into the porous toothpick.

2. The method of claim 1, wherein the first container is air-sealable with a lid and under vacuum said lid closes the air-sealable first container in an airtight manner entrapping the vacuum in the first container.

3. The method according to claims 1 or 2, wherein the liquid agent is an aqueous liquid agent, and it comprises a substance selected from the group of active pharmaceutical ingredient (API), painkillers such as lidocaine, a laxative, caffeine, psylocibin, cannabis or extracts thereof, and nicotine.

4. The method according to claims 1 to 3, wherein the vacuum is adjusted to between 0,01 MPa and 0,2 MPa, 0,04 MPa and 0,15 MPa, 0,05 MPa and 0,1 MPa or, 0,08 MPa and 0,9 MPa.

5. The method according to claims 2 to 4, wherein the vacuum seals the lid of said first container, the container additionally comprising a vacuum, and wherein the porous toothpicks remain vertically in the container for liquid agent transfer for between 12 hours and 15 days, 1 day and 10 days, or between 4 days and 7 days.

6. The method according to any of the previous claims, wherein the amount of liquid agent is transferred entirely to the porous toothpick such that the toothpick is saturated and preferably there is no liquid left to be transferred.

7. The method according to any of the previous claims wherein the first container is made of glass, preferably a mason jar.

8. The method according to any of the previous claim, wherein the porous toothpick is a wooden toothpick.

9. The method according to claims 3 to 8, wherein the aqueous liquid agent comprises nicotine and the concentration of the nicotine is between 5 mg/ml and 200 mg/ml, 10 mg/ml and 70 mg/ml, 20 mg/ml and 50 mg/ml or, 25 mg/ml and 35 mg/ml.

10. The method according to any of the previous claims, wherein the liquid agent comprises a flavoring agent selected from the group comprising mint flavor, cinnamon flavor, tobacco flavor, vanilla flavor, strawberry flavor, sweetening flavor, or lime flavor.

11. The method according to any of the previous claims, wherein aqueous solution comprises a hygroscopic solution such as glycerin.

12. The method according to claim 11, wherein the glycerin is at a volume percent concentration of between 45% to 69% of the aqueous liquid agent, 50% to 65% of the aqueous liquid agent, 55% to 65% of the aqueous liquid agent, or 58% to 62% of the aqueous liquid agent.

13. Method according to any of the previous claims, wherein the liquid agent is precooled to a temperature of between 2°C and 15°C, preferably between 2°C and 8°C.

14. Method according to claims 3 to 13, wherein the nicotine is at a volume percent concentration of between 0,1 to 20% of the aqueous liquid agent, 0,1% to 20% of the aqueous liquid agent, or 3% to 10% of the aqueous liquid agent.

15. Method according to any of the previous claims, wherein the liquid agent is diluted from a concentrated pre-cooled stock agent previously stored UV-sealed.

16. Method according to claims 1 to 15, wherein the liquid transfer takes place at room temperature.

17. Toothpick made with a method according to claims 1 to 16.
